# EUROPEAN PATENT APPLICATION

(11) **EP 3 153 244 A1**
(43) Date of publication of application: **12.04.2017**
(21) Application number: 15802358.0
(22) Date of filing: 29.05.2015
(51) Int. Cl.: B08B 3/08, B08B 3/10, C01D 1/04

(54) **METHOD FOR INACTIVATING SODIUM METAL**

(30) Priority: 04.06.2014 JP 2014115803; 13.04.2015 JP 2015081912
(71) Applicant: Nippon Soda Co., Ltd., Tokyo 100-8165 (JP)
(72) Inventor: ITO Hideaki, Joetsu-shi Niigata 949-2392 (JP); ARAKAWA Toru, Joetsu-shi Niigata 949-2392 (JP); AIBA Takahiro, Joetsu-shi Niigata 949-2392 (JP)
(74) Representative: Wibbelmann, Jobst
(86) International application number: PCT/JP2015/065639
(87) International publication number: WO 2015/186637

(57) **Abstract**

A method for cleaning a storage tank to which sodium metal is adherent, the method containing: filling, with an inert oil, the storage tank to which sodium metal is adherent; subsequently adding water, water vapor, or a humidified inert gas to the inert oil; providing a gas discharge line to the storage tank and measuring the hydrogen gas concentration in the gas discharge line; regulating the amount of the water, water vapor, or humidified inert gas to be added per hour in accordance with the level of the hydrogen gas concentration; regulating the temperature of the inert oil to 0-98°C; and converting the sodium metal into caustic soda while changing the liquid surface level of the inert oil in parallel with addition of the water, water vapor, or humidified inert gas to the inert oil.

## Description

### TECHNICAL FIELD

The present invention relates to a method for inactivating sodium metal, and a method for cleaning an apparatus or a storage tank, to which a sodium metal is adherent.

The present invention claims priority on the basis of Japanese Patent Application No. 2014-115803 filed in Japan on June 4, 2014, and Japanese Patent Application No. 2015-081912 filed in Japan on April 13, 2015, the contents of which are incorporated herein by reference.

### BACKGROUND OF THE INVENTION

A sodium metal dispersion (hereinafter, may be abbreviated as SD agent) is an agent prepared by dispersing sodium metal particles in an inert oil. The sodium metal dispersion is used to remove PCB. There is a case where sodium metal is deposited to lump in an icicle-shape or the like from the top surface or in the side of a storage tank when the SD agent is stored in the storage tank. When the lump is left still, the storage tank may crack, and there is a risk to cause an explosion or fire in the reaction of water and sodium metal.

Non-Patent Document 1 discloses steam cleaning in the air, steam cleaning in an inert gas, alcohol cleaning, high temperature oil cleaning, liquefied ammonia cleaning, low temperature alloy cleaning, cleaning with cloth or the like, water cleaning, or sandblasting, as a method for cleaning components of an apparatus to which a sodium metal is adherent.

According to the disclosure of Non-Patent Document 1, the steam cleaning is the most common method for cleaning sodium. The steam cleaning is effective in the case where the storage tank has a shape associated with difficulty in removing sodium therefrom. However, it needs time if there is a large amount of sodium. There is a possibility in which sodium is blown away with steam to fall in a puddle, and the reaction excessively proceeds.

The alcohol used in alcohol cleaning reacts with sodium metal slowly in comparison with water. Alcohol cleaning needs when the amount of sodium metal is large. In addition, the alcohol has inflammability.

The high temperature oil cleaning is a method of mechanically cleaning at about 200°C using a mineral oil. However, it is impossible to conduct sufficient cleaning.

A method of wiping by human is a method of wiping using a cloth moistened with very little water or alcohol, and therefore it is not suitable to clean a large amount of sodium. Working under an inert gas atmosphere is required, and therefore heavy equipment is required.

A method for inactivation by flowing water has difficulty in the control of produced hydrogen, and a possibility in which sodium metal heated by the heat of reaction between sodium metal and water is melted at one time, and thereby the reaction is accelerated at once, which results in difficulty in control of inactivation.
Patent Document 1 discloses a method for treating sodium metal remaining to be adherent to the device surface, characterized in that the device surface having the adherent sodium metal is cleaned in one step with a wet inert gas which is mixed with carbon dioxide under pressure variation such as pressurization, atmospheric pressure, and reduced pressure, to stabilize the adherent sodium metal by converting the same into sodium carbonate
Patent Document 2 discloses a method for cleaning an equipment in which a sodium is used, characterized in that an adherent sodium metal is removed by cleaning component parts of the equipment, in which a sodium is used and a sodium metal is adherent, with an inert oil having a temperature no lower than a melting point of sodium.
Patent Document 3 discloses a method for cleaning an object having an adherent sodium metal, characterized in that a cleaning container constituting a cleaning apparatus is filled with a cleaning liquid to form a liquid phase, and then the object having an adherent sodium metal is immersed in the liquid phase; and a method for cleaning sodium metal, characterized in that an inert gas is blown into a cleaning apparatus in which an object having an adherent sodium metal is cleaned to make the oxygen concentration in the cleaning apparatus below the explosion limit concentration.

### DOCUMENTS OF RELATED ART

### Patent Documents

Patent Document 1: Japanese Unexamined Patent Application, first publication No. S62-75396
Patent Document 2: Japanese Laid-open Patent Application No. 2007-254870
Patent Document 3: Japanese Laid-open Patent Application No. 2003-121593

### Non-Patent Documents

Non-Patent Document 1: "Liquid sodium handling safety guidelines" Japan Atomic Energy Research Institute, pages 17 to 19, December 1968.

### SUMMARY OF THE INVENTION

### PROBLEMS TO BE SOLVED BY THE INVENTION

The present inventors have conducted studies in order to solve the problems, and as a result, the present invention including the following aspects has been completed.

(1) A method for inactivating sodium metal containing: immersing a sodium metal in an inert oil; and subsequently adding a moisture to the inert oil to convert the sodium metal into a caustic soda.
(2) The inactivating method according to (1), further containing changing a liquid surface level of the inert oil in parallel with the addition of the moisture.
(3) The inactivating method according to (1) or (2), further containing regulating a temperature of the inert oil to 0°C to 98°C.
(4) The inactivating method according to any one of (1) to (3), wherein at least one of the moisture and the inert oil contains a surfactant.
(5) A method for cleaning an apparatus to which a sodium metal is adherent, containing: immersing, in an inert oil, the apparatus to which a sodium metal is adherent, and subsequently adding a moisture to the inert oil to convert the sodium metal into a caustic soda.
(6) A method for cleaning a storage tank to which a sodium metal is adherent, containing: putting an inert oil in the storage tank to which a sodium metal is adherent, and subsequently adding a moisture to the inert oil to convert the sodium metal into a caustic soda.
(7) The cleaning method according to (5) or (6), further containing scraping the adherent sodium metal into the inert oil.
(8) The cleaning method according to any one of (5) to (7), wherein a hydrogen gas concentration is measured, and an amount of the moisture to be added per hour is regulated in accordance with the measured hydrogen gas concentration.
(9) The cleaning method according to any one of (5) to (8), further containing changing a liquid surface level of the inert oil in parallel with the addition of the moisture.
(10) The cleaning method according to any one of (5) to (9), further containing regulating a temperature of the inert oil to 0°C to 98°C.
(11) The cleaning method according to any one of (5) to (10), wherein at least one of the moisture and the inert oil contains a surfactant.

### EFFECTS OF THE INVENTION

The method for inactivating sodium metal according to the first aspect of the present invention makes it possible to inactivate sodium metal industrially and safely.

The cleaning method according to another aspect of the present invention makes it possible to inactivate and clean sodium metal adherent in a storage tank or an apparatus industrially, safely, and surely. The cleaning method according to the present invention makes it possible to inactivate a large amount of sodium metal adherent in a storage tank or an apparatus as a lump in a step-by-step manner, and to remove it safely and surely. It is possible to apply the inactivating method or the cleaning method according to the present invention widely from the small scale of a laboratory level to the large scale of a factory level.

### EMBODIMENTS FOR CARRYING OUT THE INVENTION

A method for inactivating sodium metal according to the first aspect of the present invention contains: immersing a sodium metal in an inert oil; and subsequently adding moisture to the inert oil to convert the sodium metal into a caustic soda.

There are no particular limitations on the inert oil available in the present invention, provided that the inert oil is used to store sodium metal. Examples of the inert oil include hexane, cyclohexane, benzene, kerosene, decalin, trans oil (trans oil according to JIS C 2320-1993), heavy oil (according to JIS K2205), liquid paraffin, and cleaning oils (solvents containing hydrocarbons as the main component thereof, the solvents being to be used as an alternative to chlorofluorocarbon, trichloroethane, kerosene, or the like, to clean automobiles, electronic components, or precision instruments). It is preferable from the standpoint of conversion reaction efficiency from sodium metal to caustic soda as well as safety that the temperature of the inert oil be 0°C to 98°C, more preferably 0°C to 60°C, and even more preferably 0°C to 40°C.

The condition of the sodium metal to which the method according to the present invention is applied is not particularly limited. Examples thereof include: sodium metal adherent to an apparatus or a storage tank; sodium metal dispersing in a medium such as sodium metal dispersion; mixtures of sodium metal and other substances; and deteriorated sodium metal oxidized by contacting with air. The apparatus encompass: mechanical equipments such as kneaders, pumps, and impellers; and tubes, valves, flanges, and strainers, configured to connect the mechanical equipment together.

The amount of sodium metal relative to the inert oil is not particularly limited, provided that the inert oil is allowed to contact with sodium metal even when moisture is added thereto. For example, in the case where sodium metal adherent to an apparatus is inactivated, the amount of the sodium metal may be set to allow the entire apparatus to which a sodium metal is adherent to submerge in the inert oil. In the case where sodium metal adherent to a storage tank is inactivated, the amount of the sodium metal may be set to allow the sodium metal adherent to the inner surface of the storage tank to exist below the liquid surface of the inert oil.

The condition of moisture to be added is not particularly limited. Examples of the moisture include ice, water (liquid), water vapor, humidified inert gas, steam, mist, and fume.

It is preferable that the amount of moisture (H₂O) to be added, relative to 1 mol of Na, be 3 mol or more (temperature of the inert oil: 0-98°C), and more preferably 4 mol or more (temperature of the inert oil: 0-40°C), from the standpoint of conversion reaction efficiency. The upper limit of the amount of moisture (H₂O) to be added is approximately set to allow the produced hydrogen gas concentration to be less than 4% by volume.

The moisture adding method may be selected in accordance with the condition of moisture. In the case where moisture is a solid, the moisture may be thrown in the inert oil, for example. In the case where moisture is a liquid, the moisture may be dropped, showered down, or flown from a position higher than the liquid surface of the inert oil, or may be introduced via a tube from a position lower than the liquid surface of the inert oil, for example. In the case where moisture is a gas, the moisture may be blown via a tube from a position higher than the liquid surface of the inert oil, or may be blown via a tube from a position lower than the liquid surface of the inert oil. There is a case where accessibility between sodium metal and moisture is improved by introducing moisture from a position lower than the liquid surface of the inert oil via a tube to cause bubbling. It is preferable according to the present invention that the liquid surface level of the inert oil be changed in parallel with the addition of the moisture, and the liquid surface level of the inert oil be increased as proportional to the cumulative amount of the added moisture. The term liquid surface level means here the high from the bottom face to the liquid surface of the inert oil in a vertical direction. The liquid surface level of the inert oil may be changed by gradually removing the inert oil from a storage tank or gradually adding the inert oil thereto. The change in the liquid surface level makes the adherent sodium metal to be revealed or submerged, and thereby the accessibility between the moisture (H₂O) and sodium metal (Na) is changed, and thus the progress of inactivation of the adherent sodium metal tends to be promoted.

It is preferable that the addition of the moisture be conducted under the inert gas atmosphere while stirring the inert oil. Examples of the inert gas include a nitrogen gas and an argon gas. The stirring step may be conducted with a stirrer or causing bubbling due to blowing of a water vapor or a humidified inert gas. It is preferable that the inert gas be introduced continuously into a storage tank or a container in which inactivation is conducted while regulating the flow rate thereof so that the produced hydrogen gas concentration is less than 4% by volume.

It is preferable that either the moisture or the inert oil or both the moisture and the inert oil contain a surfactant, and more preferably at least the moisture contain a surfactant. There are no particular limitations on the surfactant, provided that the surfactant can increase the affinity between water and the inert oil. Examples of the surfactant include anionic surfactants, cationic surfactants, nonionic surfactants, and amphoteric surfactants.

Examples of the nonionic surfactants include polyoxyalkylene alkyl (C11-15) ether, polyoxyethylene aryl ethers such, as polyoxyethylene alkyl phenyl ethers, polyoxyethylene benzyl phenyl ether, polyoxyethylene monostyryl phenyl ether, polyoxyethylene distyryl phenyl ether, and polyoxyethylene tristyryl phenyl ether, sucrose fatty acid esters, polyoxyethylene sucrose fatty acid esters, sorbitan fatty acid esters, polyoxyethylene alkylene glycol, and polyoxyethylene-polyoxypropylene block polymers.

Examples of the anionic surfactants include: alkylaryl sulfonates such as sodium alkylaryl sulfonates, calcium alkylaryl sulfonates, and ammonium alkylaryl sulfonates, polyoxyethylene alkylphenyl ether sulfates, polyoxyethylene alkylphenyl ether phosphates, alkyl sulfates such as sodium dodecyl sulfate, polyoxyethylene alkyl ether sulfates, polyoxyethylene alkyl ether phosphates, dialkyl sulfosuccinates, alkyl naphthalene sulfonates such as sodium alkyl naphthalene sulfonates, naphthalene sulfonate formaldehyde polycondensates, lignin sulfonates, and polycarboxylates.

Examples of the cationic surfactants include alkyl quaternary ammonium salts, alkylamine salts, and alkyl pyridinium salts.

Examples of the amphoteric surfactants include alkyl betaines, amine oxides, and alkylamino-acid salts.

The surfactants may be used alone or in combination of at least two kinds thereof.

Among these, the anionic surfactants or the nonionic surfactants are preferably used.

The amount of the surfactant is not particularly limited, provided that the affinity between water and the inert oil can be increased. It is preferable, for example, that the amount of the surfactant, relative to the mass of the moisture, be 0.01 to 20% by mass, more preferably 1 to 10% by mass, and even more preferably 5 to 10% by mass. It is preferable, for example, that the amount of the surfactant, relative to the mass of the inert oil, be 0.01 to 20% by mass, and more preferably 1 to 10% by mass.

The reaction of the moisture (H₂O) with Na produces caustic soda (NaOH) and hydrogen. The amount of hydrogen produced per hour can be calculated from the hydrogen gas concentration measured. The hydrogen gas concentration can be measured at a gas discharge line of a storage tank, for example. The progress of the reaction can be assessed from the amount of hydrogen produced per hour. It is preferable that the amount of the moisture to be added per hour be reduced to improve safety in the case where the amount of hydrogen produced per hour is large. In specific, it is preferable that the amount of the moisture to be added per hour be regulated while monitoring the hydrogen gas concentration in discharged gas so that the hydrogen gas concentration is less than 4% by volume. It is preferable, for example, that the amount of the moisture to be added per hour, relative to 1 mol of Na, be approximately set according to the hydrogen gas concentration within a range of about 10 to 100 ml/hour, more preferably 15 to 90 ml/hour, and even more preferably about 35 to 70 ml/hour.

On the other hand, the produced caustic soda may be washed out with water (liquid) after the end of inactivation of sodium metal. There is a case where sludge is generated from impurities. The solid components such as sludge may be washed out with water, oil, or the like.

The method for cleaning a storage tank to which sodium metal is adherent according to the second aspect of the present invention contains: putting an inert oil into the storage tank to which sodium metal is adherent; and subsequently, adding moisture thereto to convert the sodium metal into caustic soda.

Although temporal examples of the cleaning method according to the present aspect will be explained below, components same as those of the inactivating method according to the first aspect may not be explained.

### (Embodiment 1)

In first of one embodiment of the cleaning method, conditions of the storage tank are checked. Examples of the storage tank include a sodium metal dispersion storage tank. The condition in which the sodium metal is adherent to the inside of the storage tank is checked using a monitoring camera. In addition, it is checked whether the storage tank has a tube configured to exhaust sodium metal dispersion to the outside of the system or not. In the case where the tube configured to realize exhaust is absent, an exhausting tube is provided temporarily in the storage tank. Since hydrogen gas is generated when the sodium metal is converted into caustic soda, it is checked whether the storage tank has a gas discharge line configured to release hydrogen gas or not. In the case where the gas discharge line is absent, the gas discharge line is provided temporarily in the storage tank. It is preferable that a demister and a water washing tower be provided in the gas discharge line. It is preferable that an inert oil mist be made to contact with water to inactivate sodium metal contained therein, since there is a case where the inert oil mist contains sodium metal particles. In addition, it is preferable that a structure configured to prevent flowback of hydrogen be provided in the gas discharge line. Examples of the structure configured to prevent flowback include a seal pot. It is preferable that various safety apparatuses such as apparatuses configured to introduce nitrogen, or water vapor, and a flame arrestor be provided at a gas discharge aperture, in order to improve safety.

In the case where a large amount of the sodium metal dispersion remain in the storage tank, the sodium metal dispersion may be removed therefrom to empty the storage tank. The sodium metal dispersion may be removed using a pump or by carrying an inert gas to the storage tank to apply pressure thereto. Examples of the inert gas include a nitrogen gas and an argon gas.

There is a case where the sodium metal dispersion cannot be completely removed from the storage tank due to the presence of dead space or the like. However, in the case where the amount of the sodium metal dispersion remaining in the dead space is little, it is possible to consider that the storage tank becomes empty.

An inert oil is put in the empty storage tank in the present invention. It is possible to wash out the sodium metal dispersion remaining at a little amount by putting the inert oil into the storage tank.

Next, moisture is added thereto. The addition of the moisture is preferably conducted while stirring the inert gas under the inert gas atmosphere. Examples of the inert gas include a nitrogen gas and an argon gas. The stirring may be conducted with a stirrer or by blowing water vapor or humidified inert gas to cause bubbling. It is possible to realize inactivation by reacting sodium metal adherent to the storage tank and sodium metal in the sodium metal dispersion remaining at a little amount therein with H₂O to be converted to caustic soda. The progress of the reaction can be confirmed by measuring the hydrogen gas concentration. It is possible, for example, to measure the hydrogen gas concentration at the gas discharge line in the storage tank. It is preferable that rapid increase in the hydrogen gas concentration be prevented from the standpoint of safety improvement. The hydrogen explosion limit concentration in the air is 4% by volume to 75% by volume. Thus, it is preferable that a gas discharge line be provided in the storage tank, the hydrogen gas concentration in the gas discharge line be measured, and the amount of the moisture to be added per hour be regulated in accordance with the measured hydrogen gas concentration, and more preferably the amount of the moisture to be added per hour be regulated as shown in the above-mentioned first aspect,. It is preferable that the temperature of the inert oil be regulated to 0°C to 98°C, more preferably 0°C to 60°C, and even more preferably 0°C to 40°C.

Thereafter, the inert oil containing water and caustic soda is removed from the storage tank. The inert oil may be removed with a pump via a preliminary nozzle closing flange or a sight glass, for example.

Next, after the inert oil is removed, water is sprayed to the internal surface of the storage tank, as needed. It is possible to inactivate the sodium metal remaining in minute amounts with water. In addition, it is possible to elute caustic soda produced by inactivation with water to wash out the resultant. In addition, the storage tank may be filled with water instead of being sprayed with water.

Water, caustic soda, and an oil content remaining in the storage tank may be wiped away. The person enters the storage tank to wipe away them after confirming safety by measuring the oxygen concentration in the storage tank and then laying out the framework therein, as needed.

The above-mentioned cleaning method makes it possible to remove adherent sodium metal safely and certainly without cutting and separating the storage tank even if the amount of the sodium metal present in the storage tank is unclear.

### (Embodiment 2)

In the case where the amount of the sodium metal dispersion remaining in the dead space is much, the following procedure may be conducted to empty the storage tank.

The storage tank is filled with a fresh inert oil to wash away the sodium metal dispersion remaining in the dead space or the like with the inert oil. Then, the sodium metal dispersion washed away was removed from the storage tank. The removal of the inert oil containing sodium metal dispersion washed away may be conducted by carrying an inert gas or the like to the storage tank to apply pressure thereto. In the case where the sodium metal concentration in the removed sodium metal dispersion is higher than the predetermined value, the washing and removing steps in which the inert oil is used may be repeated. It is preferable that the temperature of the inert oil be 0°C to 98°C, more preferably 0°C to 60°C, and even more preferably 0°C to 40°C.

In the case where the sodium metal concentration in the removed sodium metal dispersion is lower than the predetermined value, it is considered that the storage tank becomes empty. The empty storage tank may be treated in the same way as that of Embodiment 1. In specific, the empty storage tank is filled with an inert oil, and subsequently moisture is added to the inert oil to convert the sodium metal into caustic soda, followed by removing the inert oil containing water and caustic soda from the storage tank, spraying water to the inner surface of the storage tank, as needed, and then wiping away water, caustic soda, and the oil content remaining the inner surface of the storage tank.

### (Embodiment 3)

In the case where sodium metal adherent to the storage tank forms a lump, the following steps may be conducted to realize effective inactivation.

First, the storage tank is removed from other equipments. The removing may be conducted by inserting a tube into a closing flange or the like. There is a case where the sodium metal dispersion remaining in pipe laying, interspace in connecting flange, or the like, drips off when a flange bolt is made to be loose, and thereby it is preferable that a metallic container or the like be put below the flange, to collect the sodium metal dispersion therein. The collected sodium metal dispersion may be inactivated with methanol or the like. The internal pressure in the storage tank is reduced to the atmospheric pressure, and then the preliminary nozzle closing flange or the sight glass is opened. The inside of the storage tank is observed using an endoscope or the like to confirm the condition of the adherent sodium metal dispersion.

An inert oil is poured into the storage tank until the bottom face of the storage tank is covered therewith. A metallic jig is inserted from a preliminary nozzle closing flange or a sight glass to scrape a lump of the sodium metal adherent to the inner surface of the storage tank. The scraped lump of sodium metal is dropped in the inert oil. It is preferable that the temperature of the inert oil be 0°C to 98°C, more preferably 0°C to 60°C, and even more preferably 0°C to 40°C.

After the scraping procedure is ended, the removed preliminary nozzle closing flange or sight glass is placed back. The inert gas is directed into the storage tank to make the inert gas atmosphere therein. The scraped lump of sodium metal may be inactivated while inactivating sodium metal adherent to the inner surface of the storage tank as described in Embodiment 1. In specific, the empty storage tank is filled with an inert oil, moisture is added to the inert oil to convert sodium metal (containing the scraped lump of sodium metal) to caustic soda, the inert oil containing water and caustic soda is removed from the storage tank, water is sprayed to the inner surface of the storage tank, as needed, and then water, caustic soda, and the oil content remaining in the inner surface of the storage tank are wiped away.

### (Embodiment 4)

The scraped lump of sodium metal may be inactivated before inactivating the sodium metal adherent to the inner surface of the storage tank as described in Embodiment 1.

The scraped sodium metal may be inactivated, for example, by introducing an inert oil in amounts enough to cover the bottom surface of the storage tank containing the scraped sodium metal as described in Embodiment 3, and then adding moisture thereto while stirring the mixture to make the scraped sodium metal react with H₂O in the inert oil. It is preferable that the amount of the moisture to be added be regulated while monitoring the produced hydrogen gas concentration as described in the first aspect or Embodiment 1.

After the inactivation of the scraped lump of sodium metal is ended, the inert oil containing inactivated sodium metal may be removed from the storage tank, or may be placed still. The removal of the inert oil may be conducted using a pump or by carrying an inert gas to apply pressure thereto.

The next procedure may be conducted in the same way as that of Embodiment 1. In specific, the empty storage tank may be filled with an inert oil, moisture is added to the inert oil to convert sodium metal into caustic soda, the inert oil containing water and caustic soda is removed from the storage tank, water is sprayed to the inner surface of the storage tank, as needed, and then water, caustic soda, and the oil content remaining in the inner surface of the storage tank are wiped away.

### (Embodiment 5)

It is preferable that the liquid surface level of the inert oil be changed in parallel with addition of moisture to the inert oil in Embodiment 1. The inert oil may be gradually removed from the storage tank or added thereto so as to change the liquid surface level. Although the degree of variation in the liquid surface level of the inert oil is not particularly limited, it is preferable that the degree be proportioned to the cumulative amount of the added moisture. There is a case where the variation in the liquid surface level of the inert oil makes the adherent sodium metal to be revealed or submerged, and thereby the contact condition thereof with the moisture is changed, as a result of which the inactivation of the sodium metal is promoted. It is preferable that an inter gas be introduced into the gas phase generated by the decrease in the liquid surface level of the inert oil. The introduction of the inert gas realizes conversion of sodium metal into caustic soda more safely.

The method for cleaning an apparatus to which a sodium metal is adherent according to the third aspect of the present invention contains: immersing, in an inert oil, the apparatus to which a sodium metal is adherent, and subsequently adding moisture thereto to convert the sodium metal into caustic soda.

Although a temporal example of the cleaning method according to the present aspect will be explained below, components same as those of the inactivating method according to the first aspect or the cleaning method according to the second aspect may not be explained.

### (Embodiment 6)

First in the present embodiment, conditions of apparatuses such as kneaders, pumps, and piping, are checked. Then, the apparatuses are separated from the production lines. The conditions of sodium metal adherent to the separated apparatuses are checked. There is a case where the sodium metal dispersion drips off from the apparatuses or piping at the time of separation, and therefore at the time the sodium metal dispersion is received with saucers.

The separated apparatuses are immersed in an inert oil. A container such as a tank is used to conduct immersion into the inert oil. The container may be filled with the inert oil before or after the apparatuses are stored in the container. The amount of the inert oil is not particularly limited, provided that the apparatus is submerged therein. The remaining steps for cleaning sodium metal, such as a method for adding moisture may be conducted in the same manner as that of the first or second aspect.

### EXAMPLES

### (Example 1)

A 100 ml container that could be sealed was filled with an inert oil having a temperature of 19°C, and then 4 pieces of sodium metal each having a size of 6 mm × 6 mm × 6mm were put therein. The container was sealed, and the inert oil in the container was stirred with a stirrer bar while supplying the container with a nitrogen gas at 40 ml/min. 4.3 ml of water was added thereto at 0.6 ml/hour for 1 hour, 1.2 ml/hour for 0.5 hours, and 2.4 ml/hour for 1.3 hours. The added water was present in the inert oil in a drop shape. A large size of droplets sometimes contacted with sodium metal intermittently, and thereby the inactivating reaction sometimes rapidly and intermittently progressed. When the water addition was ended, all of the put sodium metal was inactivated. It is preferable that the amount of water added be approximately regulated, since the concentration of generated hydrogen gas sometimes significantly changes.

### (Example 2)

An aqueous solution containing 5% dodecyl sodium sulfate (quenching agent A) was prepared. A 100 ml container that could be sealed was filled with an inert oil having a temperature of 17°C, and then 4 pieces of sodium metal each having a size of 6 mm × 6 mm × 6mm were put therein. The container was sealed, and the inert oil in the container was stirred with a stirrer bar while supplying the container with a nitrogen gas at 40 ml/min. 4.8 ml of the quenching agent A was added thereto at 0.6 ml/hour for 1 hour, 1.2 ml/hour for 0.5 hours, and 2.4 ml/hour for 1.5 hours. The added quenching agent A was present in the inert oil in a micelle shape. The micelles contacted with sodium metal without interruption, and thereby the inactivating reaction progressed mildly and continuously. When the addition of the quenching agent A was completed, about two-thirds of the put sodium metal was inactivated. The concentration of the generated hydrogen gas gradually changed in accordance with the amount of the added quenching agent A, and thereby the amount of the quenching agent A to be added could be easily regulated by detecting the concentration of the hydrogen gas.

### (Example 3)

An aqueous solution containing 10% polyoxyalkylenealkyl (C11-15) ether (quenching agent B) was prepared. A 100 ml container that could be sealed was filled with an inert oil having a temperature of 21°C, and then 4 pieces of sodium metal each having a size of 6 mm × 6 mm × 6mm were put therein. The container was sealed, and the inert oil in the container was stirred with a stirrer bar while supplying the container with a nitrogen gas at 40 ml/min. 4.3 ml of the quenching agent B was added thereto at 0.6 ml/hour for 1 hour, 1.2 ml/hour for 0.5 hours, and 2.4 ml/hour for 1.3 hours. The added quenching agent B was emulsified in the inert oil and present in a micelle shape. The micelles contacted with sodium metal without interruption, and thereby the inactivating reaction progressed mildly and continuously. When the addition of the quenching agent B was completed, about two-thirds of the put sodium metal was inactivated. The concentration of the generated hydrogen gas gradually changed in accordance with the amount of the added quenching agent B, and thereby the amount of the quenching agent B to be added could be easily regulated by detecting the concentration of the hydrogen gas.

Although the present invention is typified by the above-mentioned embodiments, the present invention is not limited by the embodiments, and may be carried out by adding suitable modifications within a range that is compatible with the gist of the present invention, and all such modifications are also included within the technical scope of the present invention.

### INDUSTRIAL APPLICABILITY

The method for inactivating sodium metal according to the present invention makes it possible to inactivate sodium metal industrially and safely.

The cleaning method according to the present invention makes it possible to clean a storage tank safely at a position where the storage tank is placed without moving the storage tank, even if the amount of sodium metal adherent to the storage tank or in an apparatus is unclear. In addition, the cleaning method makes it possible to inactivate sodium metal in a stepwise manner and to remove sodium metal safely even if the sodium metal is adherent to the inner surface to form lumps. The inactivating method and the cleaning method according to the present invention may be applied in a wide range from the small scale of a laboratory level to the large scale of a factory level.

## Claims

1. A method for inactivating sodium metal, comprising:
immersing a sodium metal in an inert oil; and
subsequently adding a moisture to the inert oil to convert the sodium metal into a caustic soda.

2. The inactivating method according to Claim 1, further comprising changing a liquid surface level of the inert oil in parallel with the addition of the moisture.

3. The inactivating method according to Claim 1 or 2, further comprising regulating a temperature of the inert oil to 0°C to 98°C.

4. The inactivating method according to any one of Claims 1 to 3, wherein at least one of the moisture and the inert oil comprises a surfactant.

5. A method for cleaning an apparatus to which a sodium metal is adherent, comprising:
immersing, in an inert oil, the apparatus to which a sodium metal is adherent, and
subsequently adding a moisture to the inert oil to convert the sodium metal into a caustic soda.

6. A method for cleaning a storage tank to which a sodium metal is adherent, comprising:
putting an inert oil in the storage tank to which a sodium metal is adherent, and
subsequently adding a moisture to the inert oil to convert the sodium metal into a caustic soda.

7. The cleaning method according to Claim 5 or 6, further comprising scraping the adherent sodium metal into the inert oil.

8. The cleaning method according to any one of Claims 5 to 7, wherein a hydrogen gas concentration is measured, and an amount of the moisture to be added per hour is regulated in accordance with the measured hydrogen gas concentration.

9. The cleaning method according to any one of Claims 5 to 8, further comprising changing a liquid surface level of the inert oil in parallel with the addition of the moisture.

10. The cleaning method according to any one of Claims 5 to 9, further comprising regulating a temperature of the inert oil to 0°C to 98°C.

11. The cleaning method according to any one of Claims 5 to 10, wherein at least one of the moisture and the inert oil comprises a surfactant.
